# EUROPÄISCHE PATENTSCHRIFT

(11) **EP 1 259 340 B1**
(45) Veröffentlichungstag und Bekanntmachung des Hinweises auf die Patenterteilung: **23.03.2005**
(21) Anmeldenummer: 01948956.6
(22) Anmeldetag: 31.01.2001
(51) Int. Cl.: B21D 55/00, B21D 5/02

(54) **SICHERHEITSEINRICHTUNG FÜR EINE FERTIGUNGSMASCHINE, Z.B. EINE ABKANTPRESSE**
SAFETY DEVICE FOR A MANUFACTURING MACHINE, FOR EXAMPLE A FOLDING PRESS
DISPOSITIF DE SECURITE POUR MACHINE DE PRODUCTION, PAR EXEMPLE UNE PRESSE PLIEUSE

(30) Priorität: 04.02.2000 AT 1752000
(43) Veröffentlichungstag der Anmeldung: 27.11.2002
(73) Patentinhaber: Trumpf Maschinen Austria GmbH & CO. KG., 4061 Pasching (AT)
(72) Erfinder: KILIAN, Friedrich, 71287 Weissach-Flacht (DE); SPERRER, Gerhard, A-4552 Wartberg/Krems (AT)
(74) Vertreter: Secklehner, Günter, Dr.
(86) Internationale Anmeldenummer: PCT/AT2001/000025
(87) Internationale Veröffentlichungsnummer: WO 2001/056720

(56) Entgegenhaltungen:
- WO-A-97/25568
- AU-B- 566 795
- DE-A- 3 830 488
- US-A- 5 579 884

## Beschreibung

Die Erfindung betrifft eine Sicherheitseinrichtung, wie im Oberbegriff des Anspruches 1 beschrieben.

An Fertigungsmaschinen, insbesondere Pressen, Abkantpressen, etc., sind zum Schutz der Bedienungsperson Sicherheitseinrichtungen in Form einer Strahlensende- und Strahlenempfangsvorrichtung vielfach im Einsatz, durch die eine Zugriffszone im Bereich eines Fertigungswerkzeuges überwacht wird. Wird ein Strahlenbündel oder Strahlenvorhang unterbrochen, z.B. durch einen Finger oder einer Hand eines Bedieners, so wird die Fertigungsmaschine durch die Maschinensteuerung stillgesetzt oder zumindest auf einen Kriechgang umgeschaltet, um einen Unfall zu vermeiden. Um diese Überwachung verläßlich und mit der erforderlichen Präzision zu betreiben, ist eine genaue Justierung erforderlich und sind darüber hinaus Maßnahmen zu treffen, um Manipulationen auszuschalten, die die Sicherheitseinrichtung unwirksam machen und dennoch einen Betrieb der Fertigungsmaschine ermöglichen.

Aufgabe der Erfindung ist es, eine Sicherheitseinrichtung zu schaffen, die rasch positioniert werden kann und einen verläßlichen Betrieb gewährleistet.

Diese Aufgabe der Erfindung wird durch die im Kennzeichenteil des Anspruches 1 wiedergegebenen Merkmale erreicht. Der überraschende Vorteil dabei ist, daß durch die Anwendung einer Detektierungsvorrichtung im unmittelbaren, dem Werkzeug zugeordneten Aufnahmevorrichtungen und eines Haltemittels der Sicherheitseinrichtung ein unzulässiger Betrieb der Fertigungsmaschine durch Manipulation an der Sicherheitseinrichtung durch eine Bedienungskraft, die üblicherweise kein Wissen über die Funktion einer Detektierungsvorrichtung aufweist, nicht möglich ist und daher eine hohe Funktionssicherheit gewährleistet ist.

Möglich ist auch eine Ausbildung nach Anspruch 2, wodurch eine rasche Anpassung der Sicherheitseinrichtung an unterschiedliche Werkzeuge nach Umrüsten derartiger Maschinen und für die Funktion exakt abgestimmte Einstellungen einfach erreicht werden.

Vorteilhaft sind auch Ausbildungen, wie in den Ansprüchen 3 und 4 beschrieben, wodurch die Montage der Sicherheitseinrichtung an der Fertigungsmaschine vereinfacht wird.

Weiters sind Ausbildungen nach den Ansprüchen 5 und 6 vorteilhaft, weil durch den Eisatz codierter Signale die Sicherheit gegen unbefugte Manipulation weiter erhöht wird.

Gemäß vorteilhaften Weiterbildungen, wie in den Ansprüchen 7 bis 10 beschrieben, wird eine exakte Führung erreicht und damit das Positionieren des Strahlensenders und des Strahlenempfängers zueinander vereinfacht.

Möglich sind aber auch Ausbildungen nach den Ansprüchen 11 und 12, weil dadurch eine kostengünstige und technisch wirksame Lösung erreicht wird.

Nach der vorteilhaften Weiterbildung, wie im Anspruch 13 beschrieben, wird für den Fall eines Aufsetzens einer Sicherheitseinrichtung auf einen das Werkzeugende überragenden Werkteil oder sonstigen Hindernissen bei Abwärtsbewegung des Preßwerkzeuges ein ungehindertes Verschieben der Sicherheitseinrichtung erreicht und damit eine Beschädigung bei einem derartigen Vorgang wirkungsvoll vermieden.

Möglich ist auch eine Ausbildung nach Anspruch 14, weil dadurch eine einfache Gestaltung erreicht wird.

Schließlich ist aber auch eine Ausbildung nach Anspruch 15 vorteilhaft, weil dadurch eine rasche Vorpositionierung des Haltemittels und damit eine Vereinfachung eines Umrüstvorganges erreicht wird.

Zum besseren Verständnis der Erfindung wird diese anhand der in den Figuren beschriebenen Ausführungsbeispiele näher erläutert.

Es zeigen:
- Fig. 1: eine Fertigungseinrichtung mit der erfindungsgemäßen Sicherheitseinrichtung in vereinfachter, schematischer Darstellung;
- Fig. 2: ein Detail der erfindungsgemäßen Sicherheitseinrichtung in Ansicht, teilweise geschnitten;
- Fig. 3: die Sicherheitseinrichtung, geschnitten gemäß den Linien III - III in Fig. 2.

Einführend sei festgehalten, daß in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

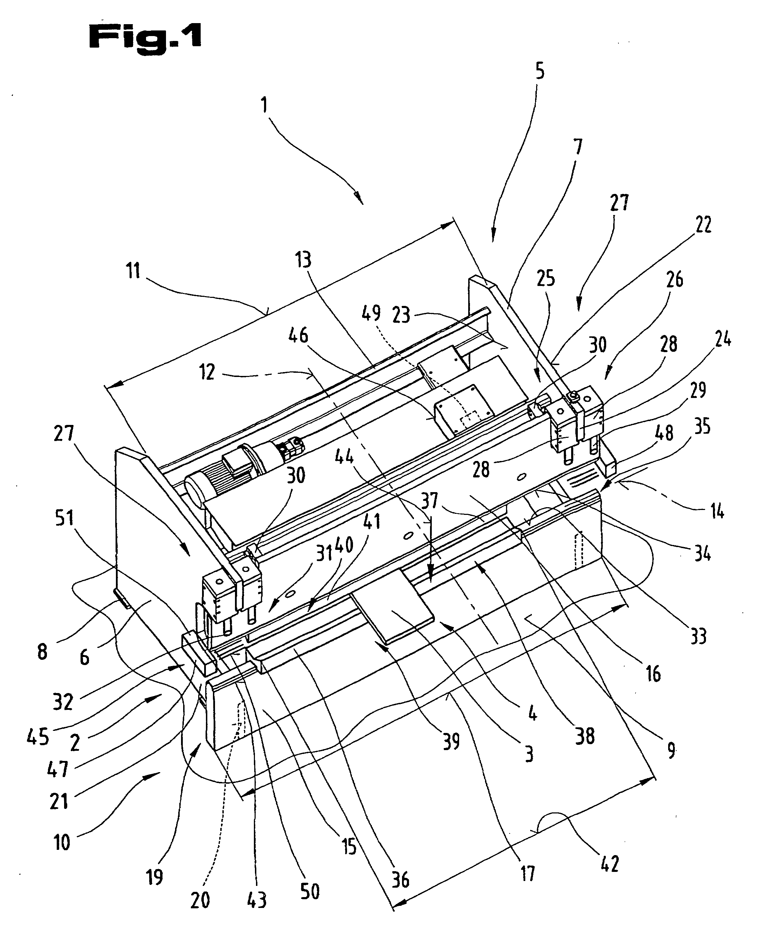

In der Fig. 1 ist eine Fertigungseinrichtung 1, insbesondere Abkantpresse 2, für das Umformen, insbesondere von Blechteilen 3, z.B. zu Gehäuseteilen, Profilen etc., gezeigt. Derartige Fertigungseinrichtungen 1 werden im speziellen für die Herstellung langgestreckter Profile 4, z.B. Winkelprofil, U-Profil, Z-Profil etc. mit einem im allgemeinen sehr großen Längen/Querschnittsverhältnis verwendet.

Ein Maschinengestell 5 der Fertigungseinrichtung 1 besteht im wesentlichen aus zwei parallel und in Abstand zueinander angeordneten C-förmig gestalteten Ständer-Seitenwangen 6, 7, die direkt oder bei Bedarf z.B. über Dämpfungselemente 8 auf einer Aufstandsfläche 9 abgestützt oder in einer weiteren Ausführungsform, wie beispielhaft gezeigt, auf einer gemeinsamen Bodenplatte 10 befestigt, insbesondere mit dieser verschweißt sind. Weiters sind die Ständer-Seitenwangen 6, 7 miteinander in einem Abstand 11 über zu einer Mittelebene 12 senkrecht verlaufende Wandteile 13 verbunden.

In bezug auf eine zu der Aufstandsfläche 9 parallel verlaufenden Arbeitsebene 14 weist die Fertigungseinrichtung 1 zwei einander gegenüberliegende Pressenbalken 15, 16 auf, die sich über eine Länge 17 erstrecken, die generell von der vorgesehenen Maschinengröße bzw. der vorgesehenen Arbeitslänge für das Biegen der Blechteile 3 festgelegt ist.

Der der Aufstandsfläche 9 zugewandte Pressenbalken 15 ist über eine Befestigungsanordnung 19 am Maschinengestell 5, bevorzugt direkt an Stirnflächen 20 von der Bodenplatte 10 zugeordneten Schenkeln 21 der C-förmigen Seitenwangen 6, 7 befestigt, insbesondere mittels Schweißverbindung. An Seitenflächen 22, 23 von zu der Aufstandsfläche 9 beabstandeten Schenkeln 24 der C-förmigen Ständer-Seitenwangen 6, 7 sind durch ein Druckmedium beaufschlagbare Stellantriebe 25, 26 der Antriebsanordnung 27, gebildet aus doppelt wirkenden Hydraulikzylindern 28, angeordnet. Stellelemente 29, z.B. Kolbenstangen der Hydraulikzylinder 28, sind mit dem in Führungsanordnungen 30 des Maschinengestells 5 in einer zur Arbeitsebene 14 senkrecht verlaufenden Richtung verstellbar gelagerten Pressenbalken 16 über Gelenklager 31 und z.B. Bolzen 32 antriebsverbunden. Der Pressenbalken 15 und der Pressenbalken 16 erstrecken sich über die Länge 17 in etwa symmetrisch und in senkrechter Richtung zur Mittelebene 12, wobei die Länge 17 geringfügig größer als der Abstand 11 ist.

Auf einander zugewandten und zur Arbeitsebene 14 parallel verlaufenden Stirnflächen 33, 34 weisen die Pressenbalken 15, 16 Werkzeugaufnahmevorrichtungen 35 zur Abstützung und lösbaren Befestigung von Biegewerkzeugen 36, 37 auf. Wie aus dem Stand der Technik bekannt, bilden diese Biegewerkzeuge 36, 37 im allgemeinen ein als Matrize 38 ausgebildetes Biegegesenk 39 und einen als Patrize 40 ausgebildeten Biegestempel 41 aus. Aus dem Stand der Technik ist es weiters bekannt, die Biegewerkzeuge 36, 37 in Sektionen zu unterteilen, wodurch sich eine leichte Variierbarkeit für eine Werkzeuglänge 42 ergibt, um diese den jeweiligen Erfordernissen anpassen zu können bzw. auch um die Umrüstung der Fertigungseinrichtung 1 oder den Austausch der Biegewerkzeuge 36, 37 einfacher vornehmen zu können.

Die Werkzeugaufnahmevorrichtungen 35 in den Pressenbalken 15, 16 sind einerseits zur lösbaren Befestigung der Biegewerkzeuge 36, 37 ausgebildet, andererseits bilden sie Stützflächen 43 zur Übertragung der Biegekräfte - gemäß Pfeil 44 - aus.

Wie weiters der Fig. 1 zu entnehmen, ist die Fertigungseinrichtung 1 mit einer Sicherheitseinrichtung 45 versehen, die mit einer Maschinensteuereinrichtung 46 leitungsverbunden ist und aus einem Strahlensender 47 und einem Strahlenempfänger 48 und einem bevorzugt in der Maschinensteuereinrichtung 46 integriert angeordneten Steuergerät 49 besteht. Der Strahlensender 47 und Strahlenempfänger 48 sind mit dem verstellbaren Pressenbalken 16 bewegungsfest verbunden und bevorzugt für Lichtstrahlen 50 ausgelegt. Zur Sicherheitsüberwachung des gesamten Arbeitsbereiches werden die Lichtstrahlen 50 parallel zum Werkzeugverlauf und über die gesamte Länge 17 der Pressenbalken 15, 16 geführt. Bevorzugt sind es mehrere parallel zueinander verlaufende Lichtstrahlen 50, die eine Art Lichtvorhang ausbilden, der in einer zur Aufstandsfläche 9 parallel verlaufenden Ebene angeordnet ist. Der Strahlensender 47 und Strahlenempfänger 48 sind mit einander zugewandten Sende- und Empfangsoptiken im Endbereich am verstellbaren Pressenbalken 16 mittels einer Haltevorrichtung 51 lösbar befestigt.

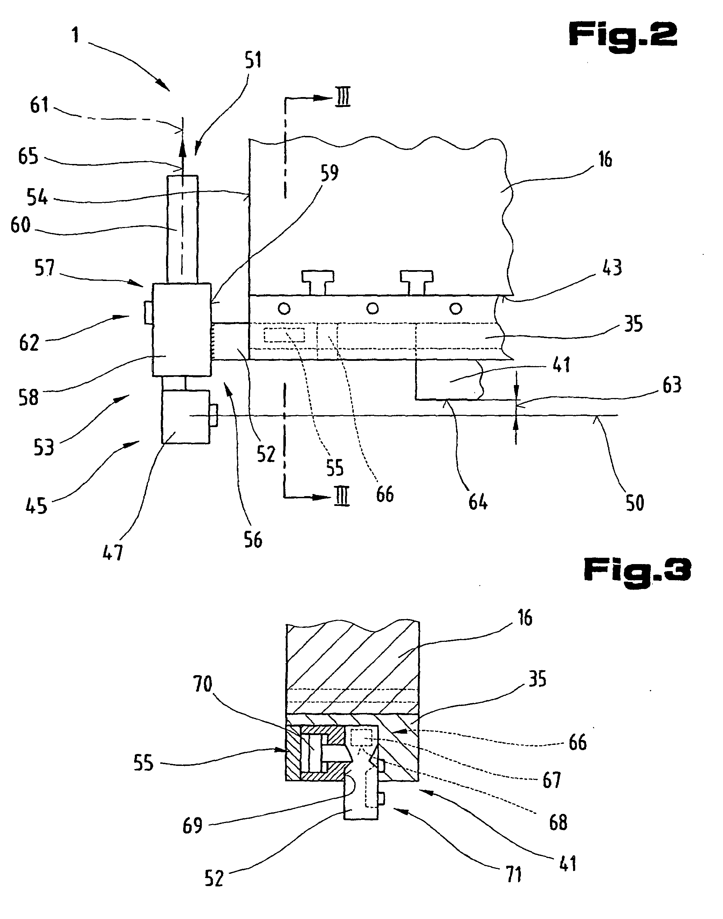

In den Fig. 2 und 3 ist die Haltevorrichtung 51 beispielhaft für den Strahlensender 47 an der Fertigungseinrichtung 1 gezeigt. Diese besteht aus einem Haltemittel 52 und einer mit diesem verbundenen Verstelleinrichtung 53. Das Haltemittel 52 ist in die nutförmige Werkzeugaufnahmevorrichtung 35 eine Stirnfläche 54 des Pressenbalkens 16 überragend eingesetzt und mittels einer Spannvorrichtung 55 gehaltert. An einem die Stirnfläche 54 überragenden Endbereich 56 ist die Verstelleinrichtung 51 in Art einer Teleskopanordnung 57 befestigt. Diese besteht beispielsweise aus einem Vierkantrohr 58, das über eine Seitenfläche 59 am stimseitigen Ende des Haltemittels befestigt ist, und einem in diesem verstellbar geführten, mit dem Strahlensender 47 bewegungsfest verbundenen Stellelement 60. Eine Längsmittelachse 61 der Teleskopanordnung 57 in dessen Richtung das Stellelement 60 im Vierkantrohr 58 verstellbar ist, verläuft in einer zur Stützfläche 43 des Pressenbalkens 16 senkrechten Richtung. Eine zwischen dem Vierkantrohr 58 und dem Stellelement 60 wirkende Rastanordnung 62 ermöglicht eine stufenweise Verstellung des Stellelementes 60 und damit die Einstellung eines Abstandes 63, von dem die Lichtstrahlen 50 gegenüber einer Biegekante 64 des Biegestempels 41 entgegen der Richtung zur Stützfläche 43 versetzt zur Wirkung kommen. Der Abstand 63 ist gemäß einschlägigen Sicherheitsvorschriften zur wirkungsvollen Verhinderung von Unfällen vorgeschrieben und beträgt einige Millimeter.

Die Rastanordnung 62 umfaßt mehrere Grundstellungen, wodurch eine rasche Justierung entsprechend standardgemäßer, unterschiedlich hoch ausgelegter Biegewerkzeuge 41 möglich ist. Des weiteren ist die Rastanordnung 62 für ein ungehindertes Verstellen des Stellelementes 60 und damit des Strahlensenders 47 - gemäß Pfeil 65 - also entgegen der Arbeitsrichtung des Pressenbalkens 16. Damit wird gewährleistet, daß der Strahlensender 47 im Falle des Auftreffens auf ein Hindernis beim Biegevorgang, z.B. durch das Biegewerkzeug 41 überragende Werkteile, beschädigt wird. Zwischen der Werkzeugaufnahmevorrichtung 35 und dem Haltemittel 52 ist eine Detektierungsvorrichtung 66 angeordnet, die z.B. durch in Eingriff bringbare Kontaktelemente 67, 68 gebildet ist und zumindest das in der Werkzeugaufnahmevorrichtung 35 angeordnete Kontaktelement 67 mit der Maschinensteuereinrichtung 46 bzw. dem Steuergerät 49 leitungsverbunden ist.

Damit wird eine Überwachung erreicht, die einen uneingeschränkten Betrieb mit der Fertigungsmaschine 1 nur bei Vorhandensein und entsprechender Funktion der Sicherheitseinrichtung 45 ermöglicht. Die Detektierungsvorrichtung 66 kann weiters auf den Austausch kodierter Signale ausgelegt sein, um eine Manipulation und damit einen Betrieb der Fertigungseinrichtung 1 unter Umgehung der Sicherheitseinrichtung wirkungsvoll zu verhindern oder nur einen eingeschränkten Betrieb, z.B. durch automatische Umschaltung auf "Kriechgang", zuzulassen.

Anstelle der Verwendung von den Kontaktelementen 67, 68 ist selbstverständlich auch eine Detektierungsvorrichtung 66 mit berührungsloser Signalübertragung möglich, um die ordnungsgemäße Anwendung und entsprechende Funktion der Sicherheitseinrichtung 45 zu überwachen. Derartige berührungslose Signalübertragungsmittel können z.B. Strahlungs-, Wellen-, Magnetfeldübertragungsmittel etc. sein. Zur weiteren Absicherung vor unzulässiger Manipulation ist auch die Anwendung codierter Signale möglich, insbesondere bei einer Detektierungsvorrichtung 66, die mit berührungslos kommunizierenden Signalsende- und Empfangselementen ausgestattet ist und die mit Codier- und Decodiermittel z.B. des Steuergerätes 49 zusammenwirken.

Die zuvor für den Strahlensender 47 beschriebene Haltevorrichtung 51 ist sinngemäß auch für den Strahlenempfänger 48 vorgesehen, wobei die ebenfalls beschriebene Detektierungsvorrichtung 66 im allgemeinen nur einmal, also entweder an der Haltevorrichtung 51 für den Strahlensender 47 oder an der Haltevorrichtung 51 für den Strahlenempfänger 48 zur Anwendung gelangt.

Das Haltemittel 52 ist in seinen Querschnittsabmessungen an einer Querschnittsabmessung einer Aufnahmenut 69 für die Biegestempel 41 in der Werkzeugaufnahmevorrichtung 35 angepaßt. Die beschriebene Spannvorrichtung 55 kann eine separate Spannvorrichtung 55 für das Haltemittel 52 sein, es ist aber auch möglich, das Haltemittel 52 mit der für derartige Werkzeuge, insbesondere Biegestempel 41 üblichen hydraulischen Spannvorrichtung 55 in der Aufnahmenut 69 mit einem aus dem Stand der Technik bekannten Druckmedium beaufschlagten Spannelement 70, wie beispielsweise einem Hydraulikkolben, zu spannen. Selbstverständlich sind aber auch von der Spannvorrichtung 55 für die Werkzeuge unabhängige Spanneinrichtungen für das Haltemittel 52 möglich.

Weiters ist es auch möglich, das Haltemittel 52 mit einer lösbaren Verriegelungsanordnung 71 in der Aufnahmenut 69 zu haltern, damit beim Lösen der Spannvorrichtung 55 das Haltemittel 52 bis zu einer manuellen Freigabe in der Aufnahmenut 69 gehaltert ist.

Der Ordnung halber sei abschließend darauf hingewiesen, daß zum besseren Verständnis des Aufbaus der Sicherheitseinrichtung 45 diese bzw. dessen Bestandteile teilweise unmaßstäblich und/oder vergrößert und/oder verkleinert dargestellt wurden.

### Bezugszeichenaufstellung

- 1: Fertigungseinrichtung
- 2: Abkantpresse
- 3: Blechteil
- 4: Profil
- 5: Maschinengestell

- 6: Ständer-Seitenwange
- 7: Ständer-Seitenwange
- 8: Dämpfungselement
- 9: Aufstandsfläche
- 10: Bodenplatte

- 11: Abstand
- 12: Mittelachse
- 13: Wandteil
- 14: Arbeitsebene
- 15: Pressenbalken

- 16: Pressenbalken
- 17 18: Länge
- 19: Befestigungsanordnung
- 20: Stirnfläche

- 21: Schenkel
- 22: Seitenfläche
- 23: Seitenfläche
- 24: Schenkel
- 25: Stellantrieb

- 26: Stellantrieb
- 27: Antriebsanordnung
- 28: Hydraulikzylinder
- 29: Stellelement
- 30: Führungsanordnung

- 31: Gelenklager
- 32: Bolzen
- 33: Stirnfläche
- 34: Stirnfläche
- 35: Werkzeugaufnahmevorrichtung

- 36: Biegewerkzeug
- 37: Biegewerkzeug
- 38: Matrize
- 39: Biegegesenk
- 40: Patrize

- 41: Biegestempel
- 42: Werkzeuglänge
- 43: Stützfläche
- 44: Pfeil
- 45: Sicherheitseinrichtung

- 46: Maschinensteuereinrichtung
- 47: Strahlensender
- 48: Strahlenempfänger
- 49: Steuergerät
- 50: Lichtstrahl

- 51: Haltevorrichtung
- 52: Haltemittel
- 53: Verstelleinrichtung
- 54: Stirnseite
- 55: Spannvorrichtung

- 56: Endbereich
- 57: Teleskopanordnung
- 58: Vierkantrohr
- 59: Seitenfläche
- 60: Stellelement

- 61: Längsmittelachse
- 62: Rastanordnung
- 63: Abstand
- 64: Biegekante
- 65: Pfeil

- 66: Detektierungsvorrichtung
- 67: Kontaktelement
- 68: Kontaktelement
- 69: Aufnahmenut
- 70: Spannelement

- 71: Verriegelungsanordnung

## Patentansprüche

1. Sicherheitseinrichtung (45), insbesondere Strahlensende- und Strahlenempfangsvorrichtung, für eine Fertigungsmaschine (1), z.B. eine Abkantpresse (2), mit einer Haltevorrichtung (51) für die Sicherheitseinrichtung (45) an einem mit Biege- und/oder Preßwerkzeugen bestückbaren Pressenbalken (16), **dadurch gekennzeichnet, daß** wenigstens eine Haltevorrichtung (51) zumindest ein Haltemittel (52) aufweist, das zur Aufnahme in einer Werkzeugaufnahmevorrichtung (35) ausgebildet ist und zwischen der Werkzeugaufnahmevorrichtung (35) und dem Haltemittel (52) eine mit einer Maschinensteuereinrichtung (46) der Fertigungseinrichtung (1) leitungsverbundene Detektierungsvorrichtung (66) angeordnet ist.

2. Sicherheitseinrichtung nach Anspruch 1, **dadurch gekennzeichnet, daß** zwischen dem Haltemittel (52) und einem Strahlensender (47) und/oder einem Strahlenempfänger (48) eine Verstelleinrichtung (53) angeordnet ist.

3. Sicherheitseinrichtung nach Anspruch 1 oder 2, **dadurch gekennzeichnet, daß** die Detektierungsvorrichtung (66) durch in der Werkzeugaufnahmevorrichtung (35) und am Haltemittel (52) angeordnete Kontaktelemente (67, 68) gebildet ist.

4. Sicherheitseinrichtung nach einem der vorhergehenden Ansprüche, **dadurch gekennzeichnet, daß** das Kontaktelement (67) im Haltemittel (52) integriert angeordnet ist.

5. Sicherheitseinrichtung nach einem der vorhergehenden Ansprüche, **dadurch gekennzeichnet, daß** die Kontaktelemente (67, 68) durch berührungslos kommunizierende Signalsende- und Empfangselemente ausgebildet sind.

6. Sicherheitseinrichtung nach einem der vorhergehenden Ansprüche, **dadurch gekennzeichnet, daß** den Signalsende- und Empfangselementen Codier- und Decodiermittel zugeordnet sind.

7. Sicherheitseinrichtung nach einem der vorhergehenden Ansprüche, **dadurch gekennzeichnet, daß** ein Querschnittsumriß des Haltemittels (52) etwa einem Querschnittsumriß einer Aufnahmenut (69) der Werkzeugaufnahmevorrichtung (35) entspricht.

8. Sicherheitseinrichtung nach einem der vorhergehenden Ansprüche, **dadurch gekennzeichnet, daß** das Haltemittel (52) über eine Spannvorrichtung (55) in der Werkzeugaufnahmevorrichtung (35) positioniert gehaltert ist.

9. Sicherheitseinrichtung nach einem der vorhergehenden Ansprüche, **dadurch gekennzeichnet, daß** die Spannvorrichtung (55) durch eine Werkzeugspannvorrichtung, insbesondere mit einem Druckmedium beaufschlagbare Spannelemente (70) gebildet ist.

10. Sicherheitseinrichtung nach einem der vorhergehenden Ansprüche, **dadurch gekennzeichnet, daß** das Haltemittel (52) eine Aufnahme für ein Spannelement (70) der in der Werkzeugaufnahmevorrichtung (35) angeordneten Spannvorrichtung (55) aufweist.

11. Sicherheitseinrichtung nach einem der vorhergehenden Ansprüche, **dadurch gekennzeichnet, daß** die Verstelleinrichtung (53) eine Rastanordnung (62) zur Lagepositionierung des Strahlensenders (47) und Strahlenempfängers (48) aufweist.

12. Sicherheitseinrichtung nach einem der vorhergehenden Ansprüche, **dadurch gekennzeichnet, daß** die Verstelleinrichtung (53) durch teleskopierbar miteinander in Eingriff stehende Stellelemente (60) gebildet ist.

13. Sicherheitseinrichtung nach einem der vorhergehenden Ansprüche, **dadurch gekennzeichnet, daß** die Rastanordnung (62) mit einer zumindest eine Bewegungsrichtung freigebende Sicherheitsauslösung versehen ist.

14. Sicherheitseinrichtung nach einem der vorhergehenden Ansprüche, **dadurch gekennzeichnet, daß** das Haltemittel (52) einstückig an der Verstelleinrichtung (53) bzw. einem Stellelement (60) angeformt ist.

15. Sicherheitseinrichtung nach einem der vorhergehenden Ansprüche, **dadurch gekennzeichnet, daß** im Haltemittel (52) eine lösbare Verriegelungsanordnung (71) angeordnet ist.

## Claims

1. Safety device (45), in particular a beam-emitting and beam-receiving system for a production machine (1), e.g. an edging press (2), with a retaining mechanism (51) for the safety device (45) on a press beam (16) to which bending and/or pressing tools can be attached, **characterised in that** at least one retaining mechanism (51) has at least one retaining means (52), designed to be received in a tool holder device (35), and a detection system (66) wired to the machine control system (46) of the production machine (1) is provided between the tool holding device (35) and the retaining means (52).

2. Safety device as claimed in claim 1, **characterised in that** an adjusting mechanism (53) is provided between the retaining means (52) and a beam emitter (47) and/or a beam receiver (48).

3. Safety device as claimed in claim 1 or 2, **characterised in that** the detection system (66) is provided in the form of contact elements (67, 68) disposed in the tool holder device (35) and on the retaining means (52).

4. Safety device as claimed in one of the preceding claims, **characterised in that** the contact element (67) is integrated in the retaining means (52).

5. Safety device as claimed in one of the preceding claims, **characterised in that** the contact elements (67, 68) are provided in the form of contactlessly communicating signal transmitter and receiver elements.

6. Safety device as claimed in one of the preceding claims, **characterised in that** coding and decoding means co-operate with the signal transmitter and receiver elements.

7. Safety device as claimed in one of the preceding claims, **characterised in that** a cross-sectional contour of the retaining means (52) more or less corresponds to a cross-sectional contour of a housing slot (69) of the tool holder device (35).

8. Safety device as claimed in one of the preceding claims, **characterised in that** the retaining means (52) is retained in the tool holder device (35) by means of a clamping mechanism (55).

9. Safety device as claimed in one of the preceding claims, **characterised in that** the clamping mechanism (55) is provided in the form of a tool clamping mechanism, in particular clamping elements (70) which can be pressurised with a pressurising medium.

10. Safety device as claimed in one of the preceding claims, **characterised in that** the retaining means (52) has a mount for a clamping element (70) of the clamping mechanism (55) disposed in the tool holder device (35).

11. Safety device as claimed in one of the preceding claims, **characterised in that** the adjusting mechanism (53) has a catch arrangement (62) for securing the position of the beam emitter (47) and beam receiver (48).

12. Safety device as claimed in one of the preceding claims, **characterised in that** the adjusting mechanism (53) is provided in the form of actuator elements (60) telescopically engaging with one another.

13. Safety device as claimed in one of the preceding claims, **characterised in that** the catch arrangement (62) is provided with a safety trip releasing displacement in at least one direction.

14. Safety device as claimed in one of the preceding claims, **characterised in that** the retaining means (52) is integrally formed on the adjusting mechanism (53) and an actuator element (60).

15. Safety device as claimed in one of the preceding claims, **characterised in that** a releasable locking arrangement (71) is provided in the retaining means (52).

## Revendications

1. Installation de sécurité (45), en particulier dispositif d'émission et de réception de rayons, pour une machine de production (1), par exemple une presse plieuse (2), avec un dispositif de retenue (51) pour l'installation de sécurité (45) à un sommier de pression (16) pouvant être garni d'outils de pliage et/ou de pressage, **caractérisée en ce qu'**au moins un dispositif de retenue (51) présente au moins un moyen de retenue (52) qui est réalisé pour la réception dans un dispositif de réception d'outil (35), et qu'il est disposé entre le dispositif de réception d'outil (35) et le moyen de retenue (52) un dispositif de détection (66) connecté à une installation de commande de machine (46) de l'installation de production (1).

2. Installation de sécurité selon la revendication 1, **caractérisée en ce qu'**une installation de réglage (53) est disposée entre le moyen de retenue (52) et un émetteur de rayons (47) et/ou un récepteur de rayons (48).

3. Installation de sécurité selon la revendication 1 ou 2, **caractérisée en ce que** le dispositif de détection (66) est formé par des éléments de contact (67, 68) disposés dans le dispositif de réception d'outil (35) et au moyen de retenue (52).

4. Installation de sécurité selon l'une des revendications précédentes, **caractérisée en ce que** l'élément de contact (67) est intégré dans le moyen de retenue (52).

5. Installation de sécurité selon l'une des revendications précédentes, **caractérisée en ce que** les éléments de contact (67, 68) sont formés par des éléments d'émission et de réception de signaux communiquant sans contact.

6. Installation de sécurité selon l'une des revendications précédentes, **caractérisée en ce que** des moyens de codage et de décodage sont associés aux éléments d'émission et de réception de signaux.

7. Installation de sécurité selon l'une des revendications précédentes, **caractérisée en ce qu'**un contour en section transversale du moyen de retenue (52) correspond à peu près à un contour en section transversale d'une rainure de réception (69) du dispositif de réception d'outil (35).

8. Installation de sécurité selon l'une des revendications précédentes, **caractérisée en ce que** le moyen de retenue (52) est maintenu par un dispositif de serrage (55) en position dans le dispositif de réception d'outil (35).

9. Installation de sécurité selon l'une des revendications précédentes, **caractérisée en ce que** le dispositif de serrage (55) est formé par un dispositif de serrage d'outil, en particulier par des éléments de serrage (70) pouvant être chargés en un milieu de pression.

10. Installation de sécurité selon l'une des revendications précédentes, **caractérisée en ce que** le moyen de retenue (52) présente un logement pour un élément de serrage (70) du dispositif de serrage (55) disposé dans le dispositif de réception d'outil (35).

11. Installation de sécurité selon l'une des revendications précédentes, **caractérisée en ce que** l'installation de réglage (53) présente un agencement d'encliquetage (62) pour assurer la position de l'émetteur de rayons (47) et du récepteur de rayons (48).

12. Installation de sécurité selon l'une des revendications précédentes, **caractérisée en ce que** l'installation de réglage (53) est formée par des éléments de positionnement (60) en prise télescopique les uns avec les autres.

13. Installation de sécurité selon l'une des revendications précédentes, **caractérisée en ce que** l'agencement d'encliquetage (62) est pourvu d'un organe de déclenchement de sécurité libérant au moins une direction de déplacement.

14. Installation de sécurité selon l'une des revendications précédentes, **caractérisée en ce que** le moyen de retenue (52) est rapporté par formage en une pièce à l'installation de réglage (53) respectivement à un élément de positionnement (60).

15. Installation de sécurité selon l'une des revendications précédentes, **caractérisée en ce qu'**il est disposé dans le moyen de retenue (52) un agencement de verrouillage relâchable(71).
